# EUROPEAN PATENT SPECIFICATION

(11) **EP 3 574 055 B1**
(45) Date of publication and mention of the grant of the patent: **01.02.2023**
(21) Application number: 17828892.4
(22) Date of filing: 20.12.2017
(51) Int. Cl.: C09D 11/32, C09D 11/322, C09D 11/102, D06P 5/30, C09D 11/54, C09D 11/328, D06P 1/60, D06P 1/651, D06P 3/60, D06P 3/82, D06P 1/52

(54) **METHOD FOR PRINTING TEXTILE FIBRE MATERIALS IN ACCORDANCE WITH THE INK-JET PRINTING PROCESS**
VERFAHREN ZUM BEDRUCKEN VON TEXTILEN FASERMATERIALIEN NACH DEM TINTENSTRAHLDRUCKVERFAHREN
PROCÉDÉ D'IMPRESSION DE MATÉRIAUX FIBREUX TEXTILES SELON LE PROCÉDÉ D'IMPRESSION À JET D'ENCRE

(30) Priority: 27.01.2017 EP 17153435
(43) Date of publication of application: 04.12.2019
(73) Proprietor: Huntsman Advanced Materials (Switzerland) GmbH, 4057 Basel (CH)
(72) Inventor: HALL-GOULLE, Véronique, 4143 Dornach (CH); NUEFFER, Luc, 68170 Rixheim (FR); SCHOEHN, Damien, 68190 Ensisheim (FR); BRACK, Olivier, 4104 Oberwil (CH); BURGLIN, Marc, 68390 Baldersheim (FR); DA SILVA SARAIVA, Sandra, 5728 Gontenschwil (CH); FAZLIC, Safeta, 4057 Basel (CH); VAN DAAL, Willem, 4123 Allschwil (CH); PRENNA, Sergio Vito, 21052 Busto (Arsizio) (IT)
(74) Representative: Meissner Bolte Partnerschaft mbB
(86) International application number: PCT/EP2017/083844
(87) International publication number: WO 2018/137859

(56) References cited:
- CN-A- 101 709 548
- US-A1- 2006 010 619
- US-A1- 2007 186 354

## Description

The present invention relates to a method for printing textile fibre materials using water-insoluble colorants, like disperse dyes, in accordance with the ink-jet printing process.

Ink-jet printing inks and processes have already been used for some time in the textile industry. They make it possible to do without the otherwise customary production of a printing stencil, so enabling considerable savings to be made in both cost and time. In connection with the production of originals, in particular, it is possible to respond to changes within a much shorter time.

Appropriate ink-jet printing inks should in particular have optimum performance characteristics. In this context mention may be made of characteristics such as viscosity, stability, surface tension and conductivity of the inks that are used. In addition, heightened requirements are placed on the quality of the resulting prints, in terms, for example, of colour strength, fibre-dye bond stability, and wet fastness properties.

A significant number of aqueous inks containing reactive dyes which are suitable for the ink-jet printing of cotton (CO) and other cellulosic fibres are known.

Ink-jet printing of polyester (PES) fibres, however, is less widespread and requires inks based on disperse dyes.

US 2006/010619 A1 discloses a process for inkjet printing of cellulosic textile fibers, wherein the fibers are pretreated with an aqueous liquor containing ethers or esters of polyetherdiols. CN 101709548 A discloses a process for inkjet printing of polyester/cotton mixed fibers, wherein the fibers are pretreated with an aqueous liquor containing low amounts of high molecular weight polyethylene glycol.

Many attempts have been made to develop efficient processes for printing PES/CO blends. Usually reactive dyes or vat dyes are combined with disperse dyes.

However, the use of such dye mixtures is associated with several drawbacks and it is hardly possible to obtain the same shade and colour depth on the two fibres by this method. Accordingly, there is a need for an ink-jet printing method for PES/CO blends which works without a combination of reactive and disperse dyes and provides printings exhibiting good washfastness, lightfastness, colour strength and brilliance.

The present invention accordingly relates to a method for printing cellulose or cellulose blend textile fibre material in accordance with the ink-jet printing process, wherein the fibre material in a first step is treated with a liquor containing at least 6 % by weight of an organic solvent having a boiling point >150 °C and an average molecular weight (weight average) M_{w} = 250 - 800 g/mol selected from polyethylene glycol and subsequently is printed with an aqueous ink comprising at least one water-insoluble colorant selected from a disperse dye, with the proviso that said solvent contains < 20 % by weight, preferably < 10 % by weight, and in particular < 5 % by weight, of a lactam and the disperse dye is selected from the compounds of formulae (1) to (11) 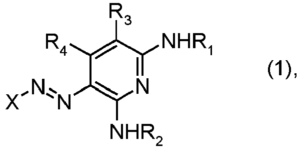
wherein R₁ and R₂ are each independently of the other C₁-C₈-alkyl, -(CH₂)ₙ-O-(CH₂)ₘR₅, wherein R₅ denotes hydrogen or C₁-C₈-alkyl, n is a number from 2 to 6 and m is a number from 0 to 6, C₅-C₂₄aryl, which is unsubstituted or substituted with one or more hydroxy groups, C₁-C₈alkyl groups, C₁-C₄alkoxy groups or halogen atoms or C₆-C₃₀aralkyl, which is unsubstituted or substituted with one or more hydroxy groups, C₁-C₄alkyl groups, C₁-C₄alkoxy groups or halogen atoms,
R₃ and R₄ are each independently of the other chlorine, bromine, cyano, methyl or trifluoromethyl,
X is a radical of formula (1a), (1b), (1c) or (1d) 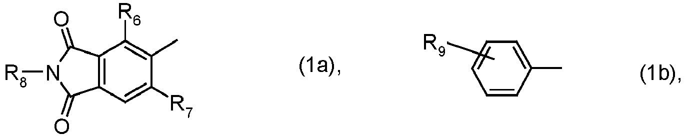 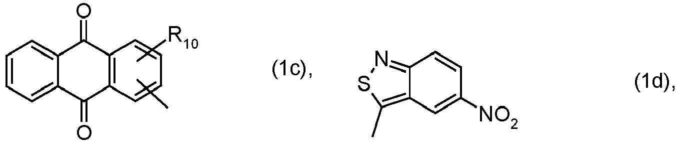
wherein R₆ and R₇ independently of the other represent hydrogen, chlorine, bromine or cyano,
R₈ denotes C₁-C₈-alkyl or -(CH₂)ₙ-O-(CH₂)ₘR₅, wherein R₅ denotes hydrogen or C₁-C₈-alkyl, n is a number from 2 to 6 and m is a number from 0 to 6,
R₉ is hydrogen, fluorine, chlorine, bromine, cyano, methyl, trifluoromethyl or -SO₂CH₃ and
R₁₀ represents hydrogen, hydroxy or amino; 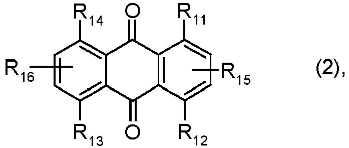
wherein R₁₁ denotes a radical of formula (2a), (2b), (2c) or (2d) 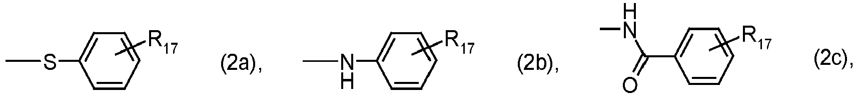 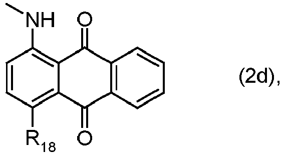
wherein R₁₇ is hydrogen, chlorine , bromine, methyl or methoxy,
R₁₈ is hydrogen, phenylamino, benzamido or C₁-C₁₂acylamido,
one of the radicals R₁₂, R₁₃ and R₁₄ denotes a radical of formula (2a), (2b), (2c) or (2d) as defined above and the others are hydrogen, and
R₁₅ and R₁₆ are each independently of the other hydrogen, bromine or chlorine; 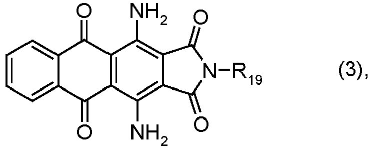
wherein R₁₉ denotes C₁-C₈alkyl or -(CH₂)ₙ-[O-(CH₂)ₘ]ₚ-OR₂₀, and R₂₀ is hydrogen, methyl or ethyl, n denotes a number from 2 to 6, m is a number from 2 to 4 and p denotes a number from 0 to 6; 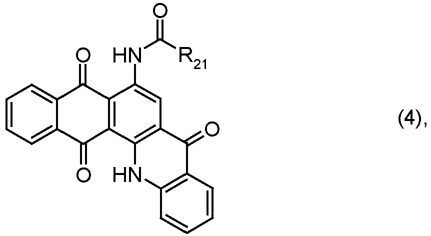
wherein R₂₁ is C₁-C₈alkyl, C₅-C₂₄aryl, which is unsubstituted or substituted with one or more hydroxy groups, C₁-C₈alkyl groups, C₁-C₄alkoxy groups or halogen atoms or C₆-C₃₀aralkyl, which is unsubstituted or substituted with one or more hydroxy groups, C₁-C₄alkyl groups, C₁-C₄alkoxy groups or halogen atoms; 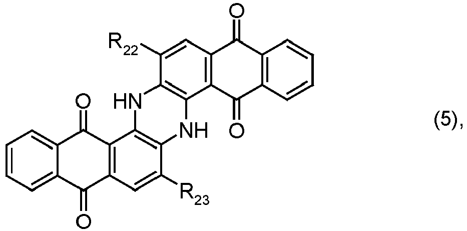
wherein R₂₂ and R₂₃ are each independently of the other hydrogen, bromine or chlorine; 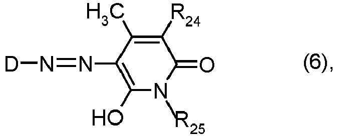
wherein R₂₄ denotes chlorine, bromine, cyano or -CONH₂,
R₂₅ is C₁-C₂₀alkyl or -(CH₂)ₙ-O-(CH₂)ₘR₅, wherein R₅ denotes hydrogen or C₁-C₈-alkyl, n is a number from 2 to 6 and m is a number from 0 to 6,
D is a radical of formula (1c) as defined above or a radical of formula (6a) 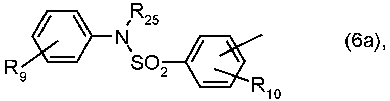
wherein R₉, R₁₀ and R₂₅ are as defined above; 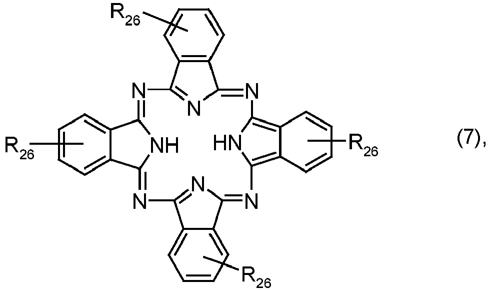
wherein R₂₆ denotes hydrogen or C₁-C₁₂alkoxy; 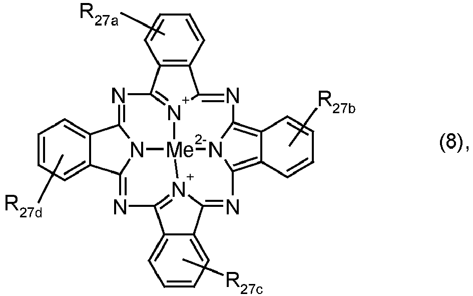
wherein Me denotes Cu, Ni, Zn or Pd,
R₂₇ₐ, R_{27b}, R_{27c} and R₂₇ₐ, are each independently of the other hydrogen, C₁-C₁₂alkoxy or -SO₂-NH-R₂₅ and R₂₅ is as defined above; 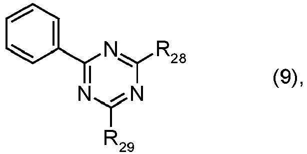
wherein R₂₈ and R₂₉ are each independently of the other a radical of formula (2b) or (2d) as defined above; 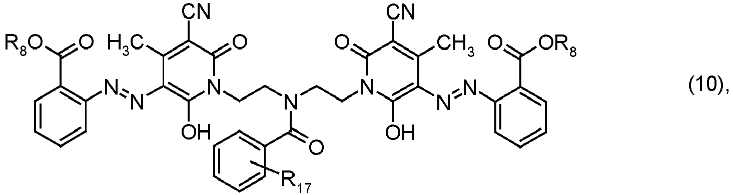
wherein R₈ and R₁₇ are as defined above; 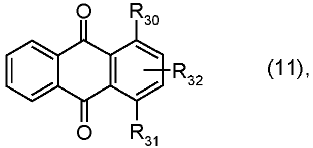
wherein R₃₀ and R₃₁ are each independently of the other amino or hydroxyl,
R₃₂ is sulfo, C₁-C₁₂alkoxy, -SO₂-NH-R₂₅ or -O-Z-SO₂-NH-R₂₅, wherein Z is phenylene and
R₂₅ is as defined above.

Elevated temperature in this context means a temperature > 60 °C, preferably > 80 °C, and in particular > 100 °C.

The treatment with the organic solvent can be carried out by known methods, for example by an exhaust process or preferably a padding process. The pretreatment liquor containing the water-soluble organic solvent may contain further customary additives, like thickening agents, levelling agents, reduction inhibitors, fixing agents etc.

Preferably the fibre material is dried after the above pretreatment.

R₁, R₂, R₅, R₈, R₁₉, R₂₁ and R₂₅ each in the meaning of C₁-C₈alkyl or C₁-C₂₀alkyl, or any of C₁-C₈alkyl bound to R₅, R₂₁ and R₂₅ in the meaning of aryl or aralkyl may be straight-chained or branched. Examples of alkyl groups are methyl, ethyl, n-propyl, isopropyl, n-butyl, isobutyl, sec-butyl, tert-butyl, n-pentyl, neopentyl, n-hexyl, n-heptyl, n-octyl, isooctyl, 2-ethylhexyl, n-decyl and n-dodecyl.

C₁-C₁₂alkoxy groups as R₂₆, or any of C₁-C₁₂alkoxy bound to R₁, R₂, R₅, R₈, R₁₉, R₂₁ and R₂₅ in the meaning of alkyl, aryl or aralkyl may be straight-chained or branched. Examples of alkoxy groups are methoxy, ethoxy, n-propoxy, isopropoxy, n-butoxy, isobutoxy, sec-butoxy, tert-butoxy, n-pentyloxy, neopentyloxy, n-hexyloxy, n-heptyloxy, n-octyloxy, isooctyloxy, n-decyloxy and n-dodecyloxy.

Examples of suitable C₅-C₂₄aryl groups are phenyl, tolyl, mesityl, isityl, 2-hydroxyphenyl, 4-hydroxyphenyl, 2-chlorophenyl, 4-chlorophenyl, 2,6-dichlorophenyl, 2-aminophenyl, 3-aminophenyl, 4-aminophenyl, 4-methoxyphenyl, 4-ethoxyphenyl, naphthyl and phenanthryl.

Examples of suitable C₆-C₃₀aralkyl groups are benzyl, 2-phenylethyl, tolylmethyl, mesitylmethyl and 4-chlorophenylmethyl.

The compounds of formulae (1) to (11) are known and either commercially available or can be prepared according to known processes.

Preferred disperses dyes are selected from the compounds of formulae (1), (3) or (11) wherein X in formula (1) is a radical of formula (1a), R₁₉ in formula (3) denotes -(CH₂)ₙ-O-(CH₂)ₘ-OR₂₀ and R₂₀, n, m and p are as defined above, and R₃₀ and R₃₁ in formula (11) are amino and R₃₂ is -SO₂-NH-R₂₅ and R₂₅ is as defined above.

Particularly preferred dyes which can be applied in the method according to the invention are the following disperse dyes:

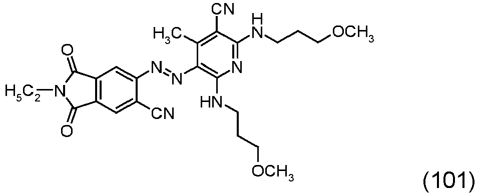

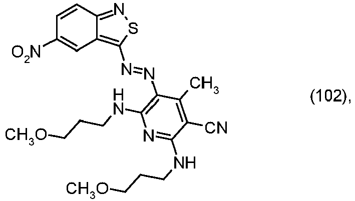

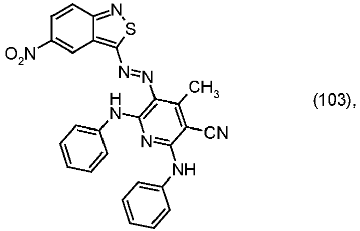

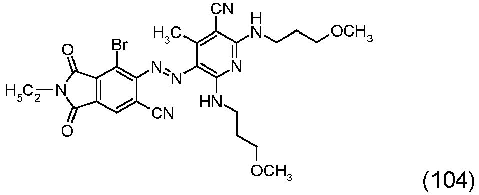

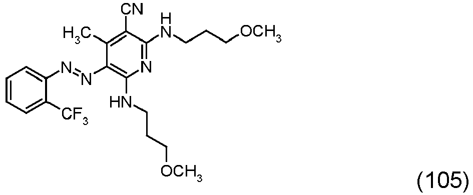

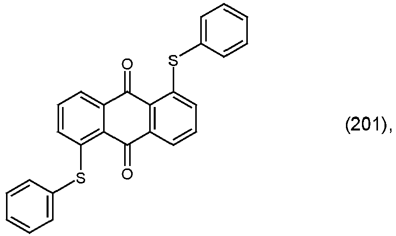

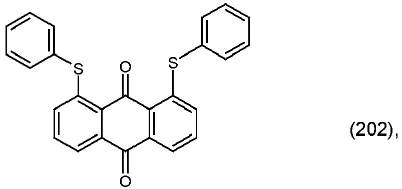

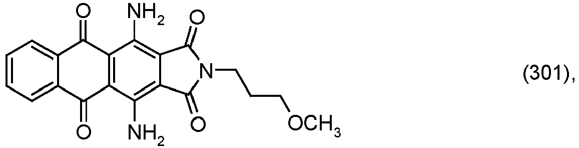

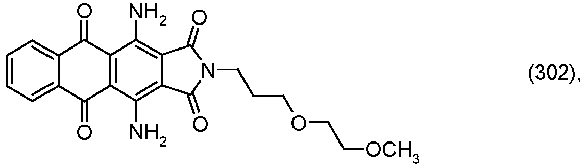

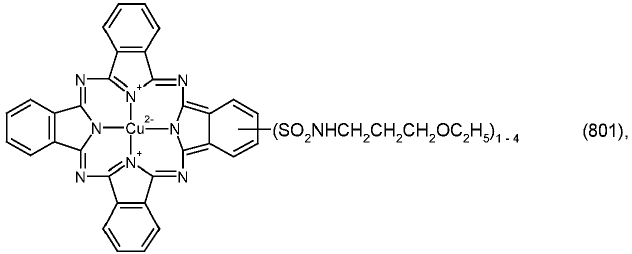

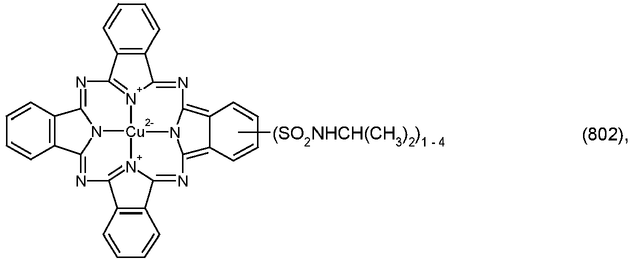

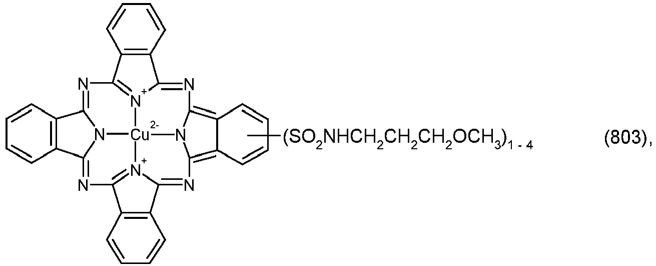

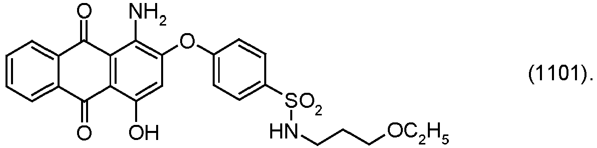

Further suitable dyestuffs that can be applied in the method according to the invention are C.I. DS BL 327, C.I. DS BL 328, C.I. DS BL 329, C.I. DS BL 350, C.I. DS BL 355, C.I. DS BR 21, C.I. DS OR 141, C.I. DS OR 150, C.I. DS RE 92, C.I. DS RE 321, C.I. DS RE 322, C.I. DS RE 346, C.I. DS RE 353, C.I. C.I. DS VI 89, DS YE 212, C.I. DS YE 213 and C.I. DS YE 214.

The organic solvent used in the process according to the invention should be water-soluble and have a high dissolving capacity for the disperse dyes of formulae (1) to (11) at the fixation temperature.

Water-soluble in this context means solubility in water of at least 2.5 % by weight at 25 °C.

The pretreatment liquor may contain one or more of the above-mentioned solvents and may additionally contain further organic solvents, provided that the amount of lactams, like 2-pyrrolidone, 2-azetidinone, N-methyl-2-pyrrolidone, 2-piperidone, ε-caprolactam, 4-ethyl-2-azetidione and 3-amino-2-piperidone, is < 20 % by weight, preferably < 15 % by weight, in particular < 10 % by weight, based on the total weight of the pretreatment liquor.

The pretreatment liquor preferably contains < 5 % by weight, more preferably < 2 % by weight, in particular < 0.5 % by weight, based on the total weight of the pretreatment liquor, of inorganic salts like, for example, calcium chloride.

The pretreatment liquor preferably contains < 3 % by weight, more preferably < 1 % by weight, based on the total weight of the pretreatment liquor, of organic acids like, for example, citric acid, tartaric acid and maleic acid.

The pretreatment liquor preferably contains 6 to 50 % by weight, more preferably 7 to 40 % by weight and in particular 8 to 30 % by weight, based on the total weight of the liquor, of a water-soluble organic solvent having a boiling point >150 °C.

The pretreatment liquor may also comprise customary auxiliaries, like levelling agents.

The inks preferably have a total content of dyes of from 0.05 to 35 % by weight, especially from 0.5 to 20 % by weight and more especially from 1 to 15 % by weight, based on the total weight of the ink.

Preferred for the process according to the invention are those inks which have a viscosity of from 1 to 50 mPa·s, especially from 2 to 30 mPa·s and more especially from 1 to 15 mPa·s.

The inks may also comprise customary additives, such as antifoam agents, antimicrobials, dispersing agents, surfactants, sequestrants, emulsifiers and degassing agents. Such additives are usually used in amounts of from 0.01 to 20 % by weight, based on the total weight of the ink.

The inks can be prepared in customary manner by mixing the individual constituents in the desired amount of water. The inks are prepared, for example, by stirring the dyestuff components with a dispersant and milling the resulting mixture in a wet mill to a defined degree of milling corresponding to an average particle size of from 0.1 to 1.0 µm. Subsequently, the concentrated millbase - with or without the use of, for example, appropriate thickeners, dispersants, copolymers, surfactants, humectants, redispersants, sequestrants and/or preservatives, and also water - is adjusted to the desired concentration. To remove any coarse fractions present it is possible with advantage to carry out filtration of the ready-to-use ink through a microsieve of about 1 µm.

The method according to the invention provides dyeings with outstanding properties, in particular with better colour strength and brilliance, compared to corresponding dyeings obtained by the conventional screen printing method.

The following Examples serve to illustrate the invention. The temperatures are given in degrees Celsius, parts are parts by weight and percentages relate to percent by weight, unless otherwise indicated. Parts by weight relate to parts by volume in a ratio of kilograms to litres.

### Example 1

A cotton fabric (Reference Nr. 1-3011, CO-crettone bleached, 135 g/m², 30/30 tex) is padded at room temperature with an aqueous formulation containing 100 g/l of MACROGOL 400 EF (PEG, average molecular weight M_{w} = 400, supplied by Brenntag), 40 g/l PREPAJET UNI (inkjet auxiliary, polyacrylic acid derivative, supplied by Huntsman) and 1 g/l ALBATEX AR (levelling agent, supplied by Huntsman) with a pick-up rate of 70-85 %. After drying at 80-100 °C for 10 min, the thus prepared fabric is printed by ink-jet with an aqueous ink containing 1.45 % by weight of a disperse dye of formula 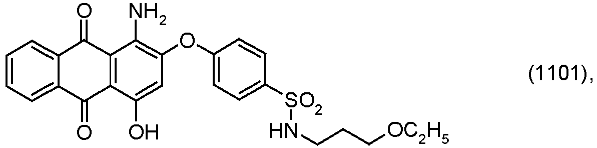
35.0 % by weight of glycerol (85 %),
   2.00 % by weight of a commercial dispersant based on ligninsulfonate,
   1.5 % by weight of a commercial tenside,
   0.28 % by weight of a commercial preservative, and
59.77 % by weight of deionized water.

After drying at 80 - 100 °C for 10 min, the printed fabric is fixed at 200 °C for 90 s. After cooling down, the printed fabric is rinsed with cold soft water and finally washed with a solution of 1 g/l of a commercial tenside, rinsed and dried.

### Example 2

The same procedure as described in Example 1 is applied to a cotton/polyester fabric (Reference Nr. 7-3014, CO/PES 33/67, fixed, bleached, mercerized, 208 g/m², 30/30 tex) instead of a cotton fabric.

### Example 3

The same procedure as described in Example 1 is applied using an aqueous ink containing 4.3 % by weight of a 3:2 mixture of the dyes of formula (301) and (302) 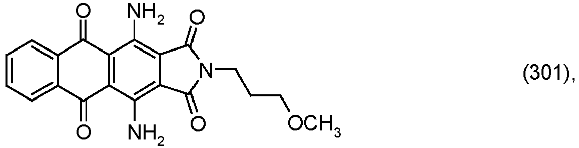 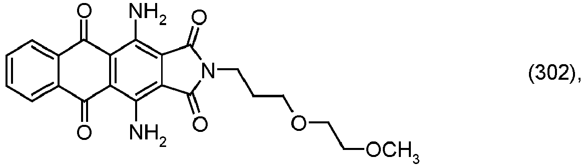
35.0 % by weight of glycerol (85 %),
   3.0 % by weight of a commercial dispersant based on ligninsulfonate,
   0.1 % by weight of a commercial preservative,
   1,5 % by weight of a commercial tenside, and
55.92 % by weight of deionized water.

### Example 4

The same procedure as described in Example 3 is applied to a cotton/polyester fabric (Reference Nr. 7-3014, CO/PES 33/67, fixed, bleached, mercerized, 208 g/m², 30/30 tex) instead of a cotton fabric.

### Comparative Example 1

Example 1 is repeated with a standard pretreatment.

### Comparative Example 2

Example 2 is repeated without the pretreatment with the formulation containing PEG.

### Comparative Example 3

Example 3 is repeated without the pretreatment with the formulation containing PEG.

### Comparative Example 4

Example 4 is repeated without the pretreatment with the formulation containing PEG.

**Table 1.: Color Coordinates and color depth measured according to the norm CIELAB 1976/DIN 6174, with D65/10 (Illuminant/Observer)**

| Example # | L (Lightness) | a* | b* | C* (Chroma) | H (Hue) | RD (Reference Depth) |
|---|---|---|---|---|---|---|
| Example 1 | 43.35 | 39.82 | -6.01 | 40.27 | 351.42 | 0.44 |
| Example 2 | 46.78 | 44.71 | -4.79 | 44.97 | 353.89 | 0.36 |
| Example 3 | 48.13 | -0.58 | -21.05 | 21.06 | 268.43 | 0.28 |
| Example 4 | 52.73 | -13.16 | -23.57 | 26.99 | 240.82 | 0.26 |
| Comp. Ex 1 | 49.41 | 34.19 | -3.37 | 34.36 | 354.37 | 0.29 |
| Comp. Ex 2 | 53.56 | 41.92 | 0.08 | 41.92 | 0.11 | 0.24 |
| Comp. Ex 3 | 53.94 | 0.09 | -12.30 | 12.30 | 270.42 | 0.20 |
| Comp. Ex 4 | 57.64 | -16.66 | -20.23 | 26.21 | 230.52 | 0.19 |

### Example 5

A cotton fabric (Reference Nr. 1-3011, CO-crettone bleached, 135 g/m², 30/30 tex) is padded at room temperature with an aqueous formulation containing 200 g/l of MACROGOL 400 EF (PEG, average molecular weight M_{w} = 400, supplied by Brenntag) and 40 g/l PREPAJET UNI (inkjet auxiliary, polyacrylic acid derivative, supplied by Huntsman) with a pick-up rate of 70-85 %. After drying at 80-100 °C for 10 min, the thus prepared fabric is printed by ink-jet with an aqueous ink containing

3.41 % by weight of a disperse dye of formula (201) 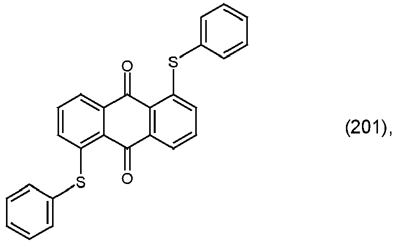
39.0 % by weight of glycerol (85 %),
   3.41 % by weight of a mixture of commercial water-soluble polymeric dispersants,
   0,20 % by weight of a commercial tenside, and
53.96 % by weight of deionized water.

After drying at 80 - 100 °C for 10 min, the printed fabric is fixed at 200 °C for 90 s. After cooling down, the printed fabric is rinsed with cold soft water and finally washed with a solution of 1 g/l commercial tenside, rinsed and dried.

Deep yellow prints of high color strength having good all-round fastness properties, especially washfastness, rubbing fastness and light fastness, are obtained.

Similar results and properties are obtained if the dried print is fixed at lower temperature with longer fixation time or is fixed with superheated steam at 180 °C for 8 min.

### Example 6

The same procedure as described in Example 5 is applied to a cotton/polyester fabric (Reference Nr. 7-3014, CO/PES 33/67, fixed, bleached, mercerized, 208 g/m², 30/30 tex) instead of a cotton fabric.

Similarly to cotton, deep yellow prints of high color strength having good all-round fastness properties, especially washfastness, rubbing fastness and light fastness, are obtained on cotton/polyester fabric.

Similar results and properties are obtained if the dried print is fixed at lower temperature with longer fixation time or is fixed with superheated steam at 180 °C for 8 min.

### Example 7

The same procedure as described in Example 5 is applied using an aqueous ink containing 3.4 % by weight of a disperse dye of formula (101) 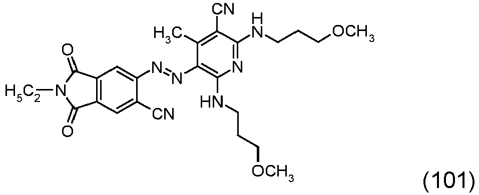
40.0 % by weight of glycerol (85%),
   3.20 % by weight of a mixture of commercial water-soluble polymeric dispersants,
   0.5 % by weight of a commercial tenside, and
52.7 % by weight of deionized water.

After drying at 80- 100 °C for 10 min, the printed fabric is fixed at 200 °C for 90 s. After cooling down, the printed fabric is rinsed with cold soft water and finally washed with a solution of 1 g/l commercial tenside, rinsed and dried.

Deep red prints of high color strength having good all-round fastness properties, especially washfastness, rubbing fastness and light fastness, are obtained.

Similar results and properties are obtained if the dried print is fixed at lower temperature with longer fixation time or is fixed with superheated steam at 180 °C for 8 min.

### Example 8

The procedure described in Example 7 is applied to a cotton/polyester fabric (Reference Nr. 7-3014, CO/PES 33/67, fixed, bleached, mercerized, 208 g/m², 30/30 tex) instead of a cotton fabric.

Similarly to cotton, deep red prints of high color strength having good all-round fastness properties, especially washfastness, rubbing fastness and light fastness, are obtained on cotton/polyester fabric.

Similar results and properties are obtained if the dried print is fixed at lower temperature with longer fixation time or is fixed with superheated steam at 180 °C for 8 min.

### Example 9

The same procedure as described in Example 5 is applied using an aqueous ink containing 6 % by weight of a disperse dye of formula (102) 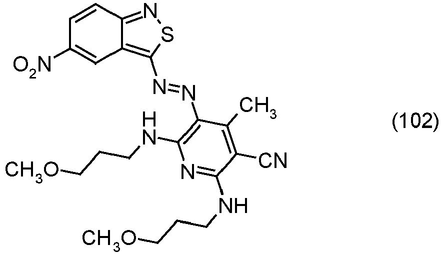
31.70% by weight of glycerol (85%),
   6.0 % by weight of commercial water-soluble polymeric dispersants,
   1.0 % by weight of a commercial tenside, and
55.3% by weight of deionized water.

After drying at 80 - 100 °C for 10 min, the printed fabric is fixed at 200 °C for 90 s. After cooling down, the printed fabric is rinsed with cold soft water and finally washed with a solution of 1 g/l a commercial tenside, rinsed and dried.

Deep violet prints of high color strength having good all-round fastness properties, especially washfastness, rubbing fastness and light fastness, are obtained.

Similar results and properties are obtained if the dried print is fixed at lower temperature with longer fixation time or is fixed with superheated steam at 180 °C for 8 min.

### Example 10

The same procedure as described in Example 9 is applied to a cotton/polyester fabric (Reference Nr. 7-3014, CO/PES 33/67, fixed, bleached, mercerized, 208 g/m², 30/30 tex) instead of a cotton fabric.

Similarly to cotton, deep violet prints of high color strength having good all-round fastness properties, especially washfastness, rubbing fastness and light fastness, are obtained on cotton/polyester fabric.

Similar results and properties are obtained if the dried print is fixed at lower temperature with longer fixation time or is fixed with superheated steam at 180 °C for 8 min.

### Example 11

The same procedure as described in Example 5 is applied using an aqueous ink containing 6.0 % by weight of a disperse dye of formula (103) 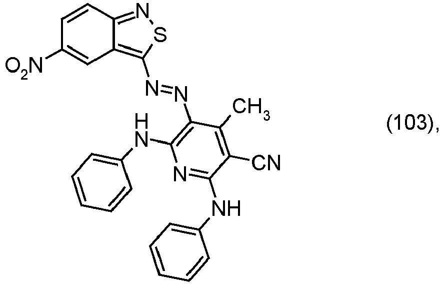
8.50 % by weight of glycerol (85%),
6.0 % by weight of commercial water-soluble polymeric dispersants,
1.0 % by weight of a commercial tenside, and
78.43 % by weight of deionized water.

After drying at 80 - 100 °C for 10 min, the printed fabric is fixed at 200 °C for 90 s. After cooling down, the printed fabric is rinsed with cold soft water and finally washed with a solution of 1 g/l commercial tenside, rinsed and dried.

Deep navy prints of high color strength having good all-round fastness properties, especially washfastness and light fastness, are obtained.

Similar results and properties are obtained if the dried print is fixed at lower temperature with longer fixation time or is fixed with superheated steam at 180 °C for 8 min.

### Example 12

The same procedure as described in Example 11 is applied to a cotton/polyester fabric (Reference Nr. 7-3014, CO/PES 33/67, fixed, bleached, mercerized, 208 g/m², 30/30 tex) instead of a cotton fabric.

Similarly to cotton, deep navy prints of high color strength having good all-round fastness properties, especially washfastness and light fastness, are obtained on cotton/polyester fabric.

Similar results and properties are obtained if the dried print is fixed at lower temperature with longer fixation time or is fixed with superheated steam at 180 °C for 8 min.

### Example 13

The same procedure as described in Example 1 is applied using an aqueous ink containing 3.50 % by weight of a disperse dye of formula (801) 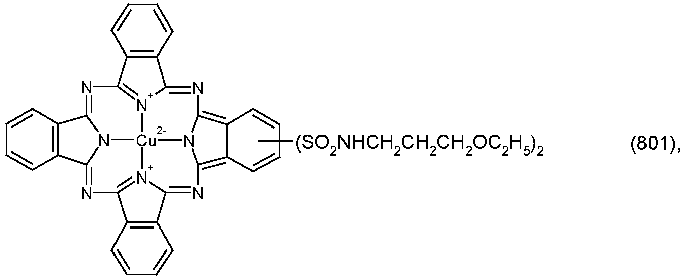
30.0 % by weight of glycerol (85%),
   3.50 % by weight of a mixture of commercial water-soluble polymeric dispersants,
   1.0 % by weight of a commercial tenside, and
62.0 % by weight of deionized water.

After drying at 80- 100 °C for 10 min, the printed fabric is fixed at 200 °C for 90 s. After cooling down, the printed fabric is rinsed with cold soft water and finally washed with a solution of 1 g/l commercial tenside, rinsed and dried.

Deep cyan prints of high color strength having good all-round fastness properties, especially washfastness, rubbing fastness and light fastness, are obtained.

Similar results and properties are obtained if the dried print is fixed at lower temperature with longer fixation time or is fixed with superheated steam at 180 °C for 8 min.

### Example 14

The same procedure as described in Example 13 is applied to a cotton/polyester fabric (Reference Nr. 7-3014, CO/PES 33/67, fixed, bleached, mercerized, 208 g/m², 30/30 tex) instead of a cotton fabric.

Similarly to cotton, deep cyan prints of high color strength having good all-round fastness properties, especially washfastness, rubbing fastness and light fastness, are obtained on cotton/polyester fabric.

Similar results and properties are obtained if the dried print is fixed at lower temperature with longer fixation time or is fixed with superheated steam at 180 °C for 8 min.

### Example15

The same procedure as described in Example 5 is applied using an aqueous ink containing 3.0 % by weight of a disperse dye of formula (104) 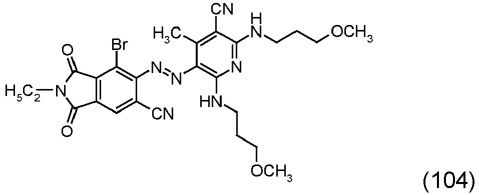
34.0 % by weight of glycerol (85%),
   3.5 % by weight of a mixture of commercial water-soluble polymeric dispersants,
   1.0 % by weight of a commercial tenside,
   2.0 % by weight of polyethylene glycol and
56.5 % by weight of deionized water.

After drying at 80- 100 °C for 10 min, the printed fabric is fixed at 200 °C for 90 s. After cooling down, the printed fabric is rinsed with cold soft water and finally washed with a solution of 1 g/l commercial tenside, rinsed and dried.

Deep magenta prints of high color strength having good all-round fastness properties, especially washfastness, rubbing fastness and light fastness, are obtained.

Similar results and properties are obtained if the dried print is fixed at lower temperature with longer fixation time or if it is fixed with superheated steam at 180 °C for 8 min.

### Comparative Example 5

Example 5 is repeated at equivalent colour depth with a standard flat screen printing method according to WO2005/024123. Fixing and washing conditions are similar to those applied in Example 5.

### Comparative Example 6

Example 6 is repeated at equivalent colour depth with a standard flat screen printing method according to WO2005/024123. Fixing and washing conditions are similar to those applied in Example 6.

### Comparative Example 13

Example 13 is repeated at equivalent colour depth with a standard flat screen printing method according to WO2005/024123. Fixing and washing conditions are similar to those applied in Example 13.

### Comparative Example 14

Example 14 is repeated at equivalent colour depth with a standard flat screen printing method according to WO2005/024123. Fixing and washing conditions are similar to those applied in Example 14.

### Comparative Example 15

Example 15 is repeated at equivalent colour depth with a standard flat screen printing method according to WO2005/024123. Fixing and washing conditions are similar to those applied in Example 15.

### Comparative Example 16

Example 16 is repeated at equivalent colour depth with a standard flat screen printing method according to WO2005/024123. Fixing and washing conditions are similar to those applied in Example 16.

**Table 2.: Color Coordinates and color depth measured according to the norm CIELAB 1976/DIN 6174, with D65/10 (Illuminant/Observer)**

| Example # | L (Lightness) | a* | b* | C* (Chroma) | H (Hue) | RD (Reference Depth) |
|---|---|---|---|---|---|---|
| Example 5 | 81.97 | 13.13 | 78.56 | 79.65 | 80.51 | 0.44 |
| Example 6 | 78.61 | 8.19 | 68.82 | 69.31 | 83.21 | 0.39 |
| Example 13 | 58.47 | -29.05 | -36.48 | 46.64 | 231.47 | 0.34 |
| Example 14 | 59.09 | -24.61 | -32.73 | 40.95 | 233.06 | 0.25 |
| Example 15 | 36.87 | 49.96 | -8.37 | 50.66 | 350.49 | 0.84 |
| Example 16 | 37.91 | 48.83 | -10.77 | 50.00 | 347.56 | 0.71 |
| Comp. Ex 5 | 81.55 | 15.38 | 77.24 | 78.76 | 78.74 | 0.44 |
| Comp. Ex 6 | 77.89 | 12.09 | 67.77 | 68.84 | 79.89 | 0.38 |
| Comp. Ex 13 | 56.56 | -26.93 | -33.62 | 43.08 | 231.29 | 0.33 |
| Comp. Ex 14 | 59.09 | -25.50 | -29.69 | 39.14 | 229.34 | 0.24 |
| Comp. Ex 15 | 35.08 | 44.87 | -11.13 | 46.24 | 346.07 | 0.85 |
| Comp. Ex 16 | 36.12 | 40.41 | -9.34 | 41.48 | 346.98 | 0.73 |

## Claims

1. A method for printing cellulose or cellulose blend textile fibre material in accordance with the ink-jet printing process, wherein the fibre material in a first step is treated with a liquor containing at least 6 % by weight of an organic solvent having a boiling point >150 °C and an average molecular weight (weight average) M_{w} = 250 - 800 g/mol selected from polyethylene glycol and subsequently is printed with an aqueous ink comprising at least one water-insoluble colorant selected from a disperse dye with the proviso that said pretreatment liquor contains < 20 % by weight of a lactam and the disperse dye is selected from the compounds of formulae (1) to (11) 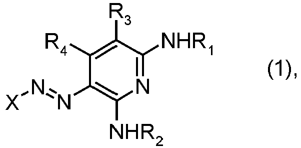
wherein R₁ and R₂ are each independently of the other C₁-C₈-alkyl, -(CH₂)ₙ-O-(CH₂)ₘR₅, wherein R₅ denotes hydrogen or C₁-C₈-alkyl, n is a number from 2 to 6 and m is a number from 0 to 6, C₅-C₂₄aryl, which is unsubstituted or substituted with one or more hydroxy groups, C₁-C₈alkyl groups, C₁-C₄alkoxy groups or halogen atoms or C₆-C₃₀aralkyl, which is unsubstituted or substituted with one or more hydroxy groups, C₁-C₄alkyl groups, C₁-C₄alkoxy groups or halogen atoms,
R₃ and R₄ are each independently of the other chlorine, bromine, cyano, methyl or trifluoromethyl,
X is a radical of formula (1a), (1b), (1c) or (1d) 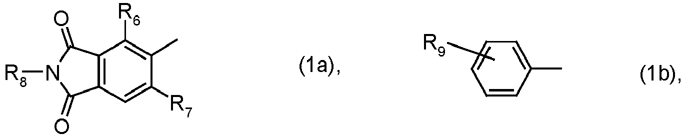 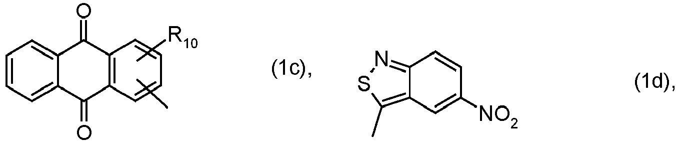
wherein R₆ and R₇ independently of the other represent hydrogen, chlorine, bromine or cyano,
R₈ denotes C₁-C₈-alkyl or -(CH₂)ₙ-O-(CH₂)ₘR₅, wherein R₅ denotes hydrogen or C₁-C₈-alkyl, n is a number from 2 to 6 and m is a number from 0 to 6,
R₉ is hydrogen, fluorine, chlorine, bromine, cyano, methyl, trifluoromethyl or -SO₂CH₃ and
R₁₀ represents hydrogen, hydroxy or amino; 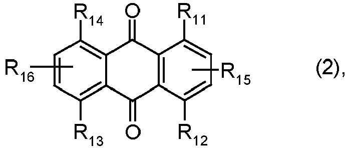
wherein R₁₁ denotes a radical of formula (2a), (2b), (2c) or (2d) 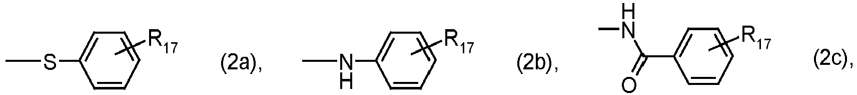 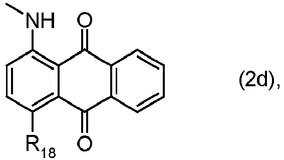
wherein R₁₇ is hydrogen, chlorine, bromine, methyl or methoxy,
R₁₈ is hydrogen, phenylamino, benzamido or C₁-C₁₂acylamido,
one of the radicals R₁₂, R₁₃ and R₁₄ denotes a radical of formula (2a), (2b), (2c) or (2d) as defined above and the others are hydrogen, and
R₁₅ and R₁₆ are each independently of the other hydrogen, bromine or chlorine; 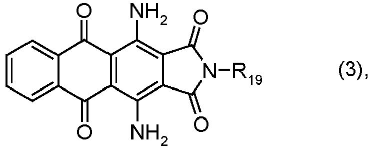
wherein R₁₉ denotes C₁-C₈alkyl or -(CH₂)ₙ-[O-(CH₂)ₘ]ₚ-OR₂₀, and R₂₀ is hydrogen, methyl or ethyl, n denotes a number from 2 to 6, m is a number from 2 to 4 and p denotes a number from 0 to 6; 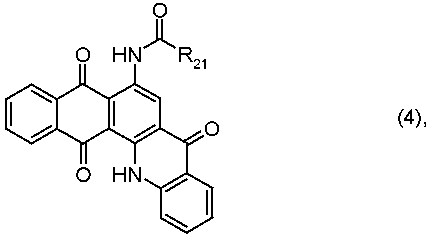
wherein R₂₁ is C₁-C₈alkyl, C₅-C₂₄aryl, which is unsubstituted or substituted with one or more hydroxy groups, C₁-C₈alkyl groups, C₁-C₄alkoxy groups or halogen atoms or C₆-C₃₀aralkyl, which is unsubstituted or substituted with one or more hydroxy groups, C₁-C₄alkyl groups, C₁-C₄alkoxy groups or halogen atoms; 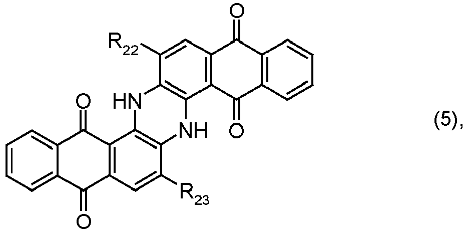
wherein R₂₂ and R₂₃ are each independently of the other hydrogen, bromine or chlorine; 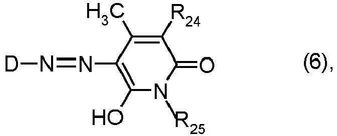
wherein R₂₄ denotes chlorine, bromine, cyano or -CONH₂,
R₂₅ is C₁-C₂₀alkyl or -(CH₂)ₙ-O-(CH₂)ₘR₅, wherein R₅ denotes hydrogen or C₁-C₈-alkyl, n is a number from 2 to 6 and m is a number from 0 to 6,
D is a radical of formula (1c) as defined above or a radical of formula (6a) 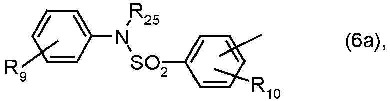
wherein R₉, R₁₀ and R₂₅ are as defined above; 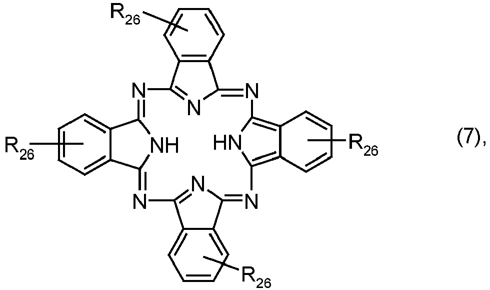
wherein R₂₆ denotes hydrogen or C₁-C₁₂alkoxy; 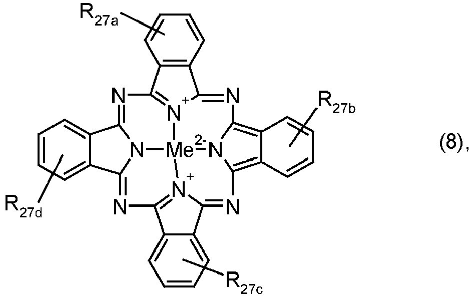
wherein Me denotes Cu, Ni, Zn or Pd,
R₂₇ₐ, R_{27b}, R_{27c} and R₂₇ₐ, are each independently of the other hydrogen, C₁-C₁₂alkoxy or - SO₂-NH-R₂₅ and R₂₅ is as defined above; 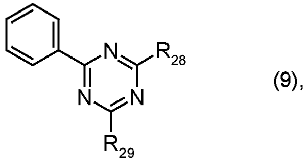
wherein R₂₈ and R₂₉ are each independently of the other a radical of formula (2b) or (2d) as defined above; 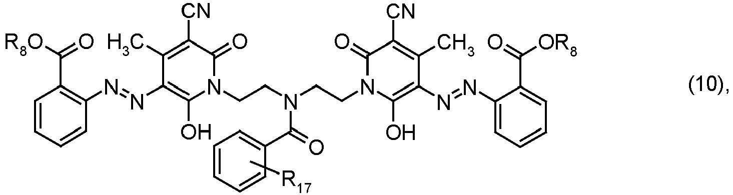
wherein R₈ and R₁₇ are as defined above; 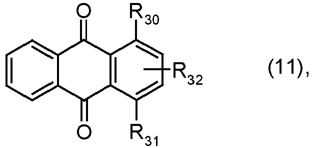
wherein R₃₀ and R₃₁ are each independently of the other amino or hydroxyl,
R₃₂ is sulfo, C₁-C₁₂alkoxy, -SO₂-NH-R₂₅ or -O-Z-SO₂-NH-R₂₅, wherein Z is phenylene and
R₂₅ is as defined above.

2. A method according to claim 1, wherein the aqueous ink comprises a disperse dye selected from the compounds of formulae (1), (3) or (11) wherein X in formula (1) is a radical of formula (1a), R₁₉ in formula (3) denotes -(CH₂)ₙ-O-(CH₂)ₘ-OR₂₀ and R₂₀, n, m and p are as defined above, and R₃₀ and R₃₁ in formula (11) are amino and R₃₂ is -SO₂-NH-R₂₅ and R₂₅ is as defined above.

3. A method according to claim 1, wherein the aqueous ink comprises a disperse dye of the following formulae

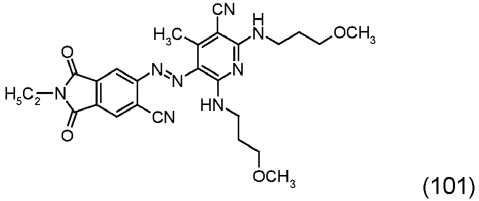

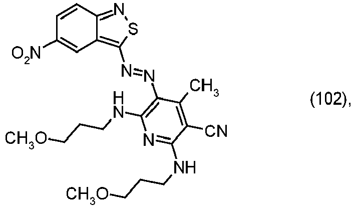

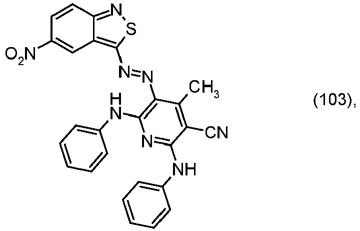

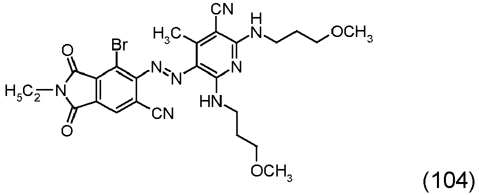

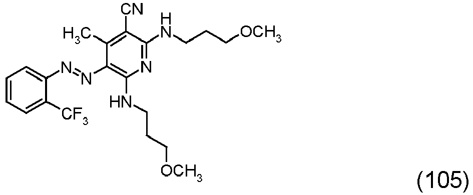

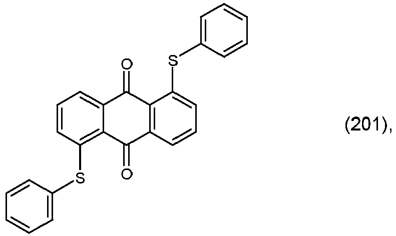

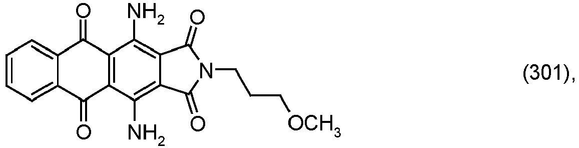

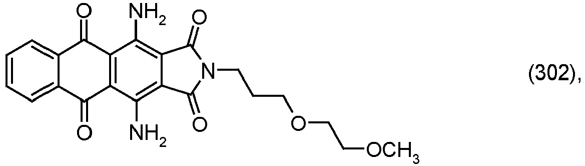

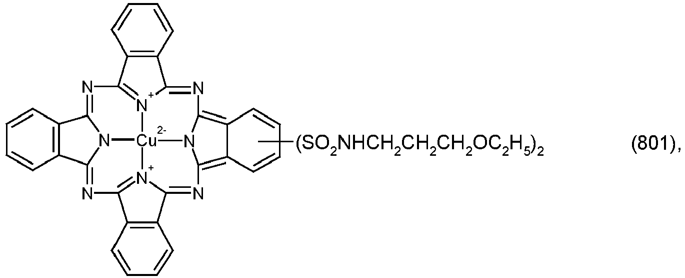

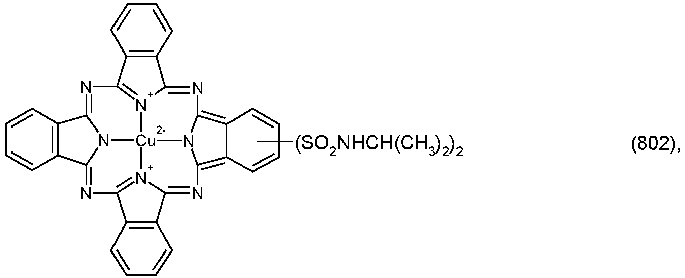

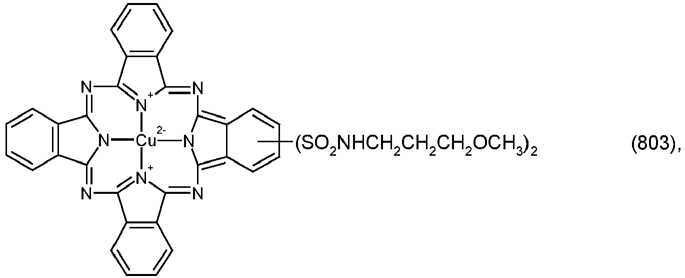

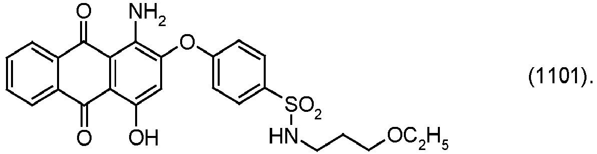

4. A method according to any one of claims 1 - 3, **characterised in that** the pretreatment liquor contains 8 to 50 % by weight, based on the total weight of the liquor, of a water-soluble organic solvent having a boiling point >150 °C.

5. A method according to any one of claims 1 - 4, **characterised in that** the aqueous ink contains 0.05 to 35 % by weight, based on the total weight of the aqueous ink of at least one disperse dye.

6. A method according to any one of claims 1 - 5, **characterised in that** a drying step is applied after the treatment with the water-soluble organic solvent.

## Patentansprüche

1. Verfahren zum Bedrucken von textilem Fasermaterial aus Cellulose oder Cellulosemischungen nach dem Tintenstrahldruckverfahren, wobei das Fasermaterial in einem ersten Schritt mit einer Flotte behandelt wird, die mindestens 6 Gew.-% eines organischen Lösungsmittels mit einem Siedepunkt >150 °C und einem mittleren Molekulargewicht (Gewichtsmittel) Mw= 250 - 800 g/mol, ausgewählt aus Polyethylenglykol, enthält, und anschließend mit einer wässrigen Tinte bedruckt wird, die mindestens ein wasserunlösliches Farbmittel, ausgewählt aus einem Dispersionsfarbstoff, enthält, mit der Maßgabe, dass die Vorbehandlungsflotte < 20 Gew.-% eines Lactams enthält und der Dispersionsfarbstoff aus den Verbindungen der Formeln (1) bis (11) ausgewählt ist 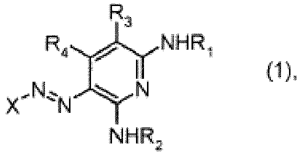
worin R₁ und R₂ unabhängig voneinander C₁-C₈-Alkyl, -(CH₂)ₙ-O-(CH₂)ₘ-R₅, worin R₅ Wasserstoff oder C₁-C₈-Alkyl bedeutet, n eine Zahl von 2 bis 6 und m eine Zahl von 0 bis 6 ist, C₅-C₂₄-Aryl, das unsubstituiert oder mit einer oder mehreren Hydroxygruppen, C₁-C₈-Alkylgruppen, C₁-C₄-Alkoxygruppen oder Halogenatomen substituiert ist, oder C₆-C₃₀-Aralkyl, das unsubstituiert oder mit einer oder mehreren Hydroxygruppen, C₁-C₄-Alkylgruppen, C₁-C₄-Alkoxygruppen oder Halogenatomen substituiert ist, R₃ und R₄ unabhängig voneinander für Chlor, Brom, Cyano, Methyl oder Trifluormethyl stehen,
X ist ein Rest der Formel (1a), (1b), (1c) oder (1d) 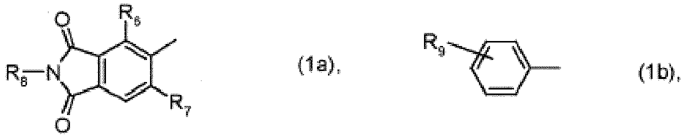 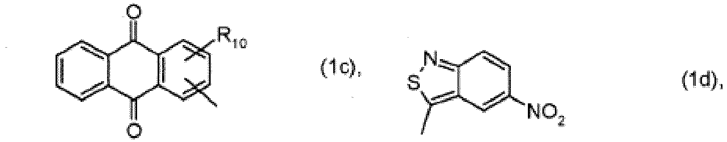
worin R₆ und R₇ unabhängig voneinander Wasserstoff, Chlor, Brom oder Cyano bedeuten,
worin R₈ C₁-C₈-Alkyl oder -(CH₂)ₙ-O-(CH₂)ₘR₅ bedeutet, wobei R₅ Wasserstoff oder C₁-C₈-Alkyl bedeutet, n eine Zahl von 2 bis 6 ist und m eine Zahl von 0 bis 6 ist, R₉ Wasserstoff, Fluor, Chlor, Brom, Cyano, Methyl, Trifluormethyl oder -SO₂CH₃ ist und R₁₀ Wasserstoff, Hydroxy oder Amino bedeutet; 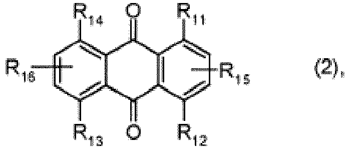
worin R₁₁ einen Rest der Formel (2a), (2b), (2c) oder (2d) bedeutet 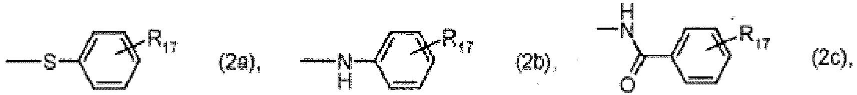 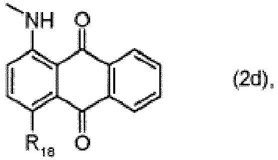
worin R₁₇ Wasserstoff, Chlor, Brom, Methyl oder Methoxy ist, R₁₈ Wasserstoff, Phenylamino, Benzamido oder C₁-C₁₂-Acylamido ist, einer der Reste R₁₂, R₁₃ und R₁₄ einen Rest der Formel (2a), (2b), (2c) oder (2d) wie oben definiert, und die anderen sind Wasserstoff, und R₁₅ und R₁₆ jeweils unabhängig voneinander Wasserstoff, Brom oder Chlor bedeuten; 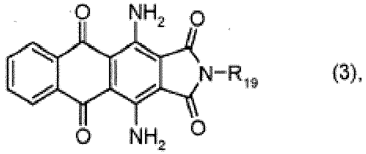
worin R₁₉ C₁-C₈-Alkyl oder -(CH₂)ₙ-(O-(CH₂)ₘ)ₚ-OR₂₀ bedeutet, und R₂₀ Wasserstoff, Methyl oder Ethyl ist, n eine Zahl von 2 bis 6 bedeutet, m eine Zahl von 2 bis 4 ist und p eine Zahl von 0 bis 6 bedeutet; 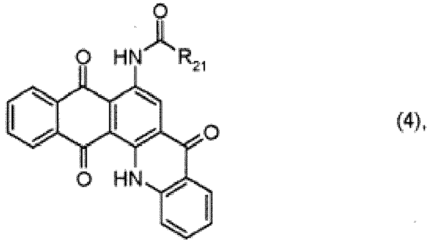
worin R₂₁ C₁-C₈-Alkyl, C₅-C₂₄-Aryl, das unsubstituiert oder mit einer oder mehreren Hydroxygruppen, C₁-C₈-Alkylgruppen, C₁-C₄-Alkoxygruppen oder Halogenatomen substituiert ist, oder C₆-C₃₀-Saralkyl, das unsubstituiert oder mit einer oder mehreren Hydroxygruppen, C₁-C₄-Alkylgruppen, C₁-C₄-Alkoxygruppen oder Halogenatomen substituiert ist, bedeutet; 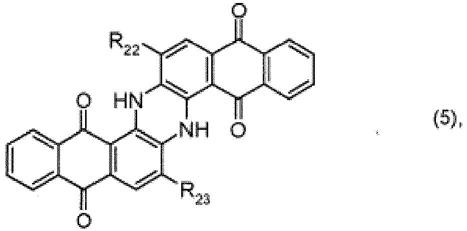
worin R₂₂ und R₂₃ jeweils unabhängig voneinander Wasserstoff, Brom oder Chlor bedeuten; 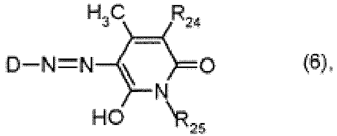
worin R₂₄ Chlor, Brom, Cyano oder -CONH₂ bedeutet, R₂₅ C₁-C₂₀-Alkyl oder -(CH₂)ₙ-O-(CH₂)ₙ-R₅ ist, wobei R₅ Wasserstoff oder C₁-C₈-Alkyl bedeutet, n eine Zahl von 2 bis 6 und m eine Zahl von 0 bis 6 ist, D ist ein Rest der Formel (1c) wie oben definiert oder ein Rest der Formel (6a) 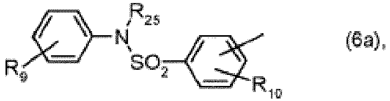
in der R₉, R₁₀ und R₂₅ die oben angegebenen Bedeutungen besitzen; 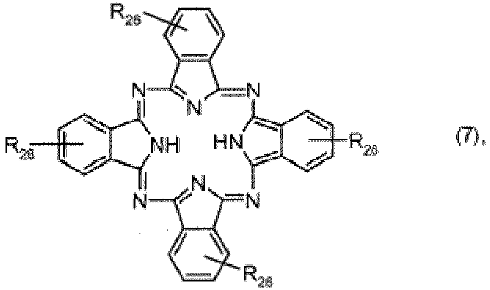
worin R₂₆ Wasserstoff oder C₁-C₁₂-Alkoxy bedeutet; 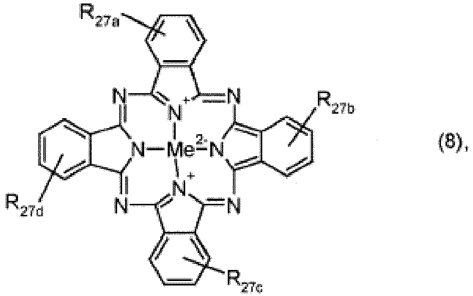
worin Me Cu, Ni, Zn oder Pd bedeutet, R₂₇ₐ, R_{27b}, R_{27c} und R_{27d} jeweils unabhängig voneinander Wasserstoff, C₁-C₁₂-Alkoxy oder -SOz-NH-Rzs bedeuten und R₂₅ wie oben definiert ist; 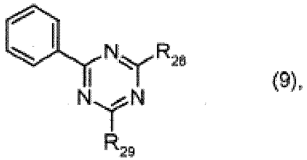
worin R₂₈ und R₂₉ jeweils unabhängig voneinander einen Rest der Formel (2b) oder (2d), wie oben definiert, bedeuten; 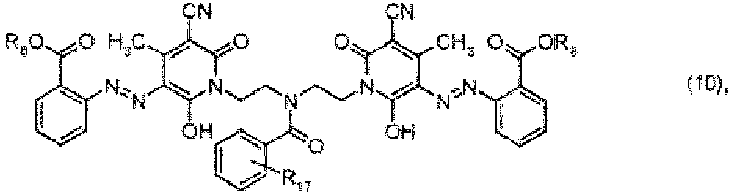
worin R₈ und R₁₇ die oben angegebene Bedeutung haben; 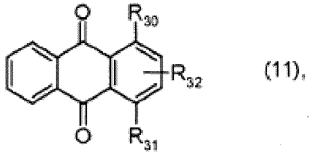
worin R₃₀ und R₃₁ jeweils unabhängig voneinander für Amino oder Hydroxyl stehen, R₃₂ ist Sulfo, C₁-C₁₂-Alkoxy, -SO₂-NH-R₂₅ oder -O-Z-SO₂-NH-R₂₅ , worin Z Phenylen ist und R₂₅ wie oben definiert ist.

2. Verfahren nach Anspruch 1, wobei die wässrige Tinte einen Dispersionsfarbstoff enthält, der aus den Verbindungen der Formeln (1), (3) oder (11) ausgewählt ist, wobei X in Formel (1) ein Rest der Formel (1a) ist, R₁₉ in Formel (3) -(CH₂)ₐ-O-(CH₂)ₘ-OR₂₀ bedeutet und R₂₀, n, m und p wie oben definiert sind, und R₃₀ und R₃₁ in Formel (11) Amino sind und R₃₂ -SOz-NH-Rzs bedeutet und R₂₅ wie oben definiert ist.

3. Verfahren nach Anspruch 1, wobei die wässrige Tinte einen Dispersionsfarbstoff mit den folgenden Formeln umfasst

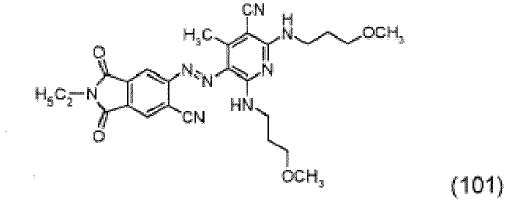

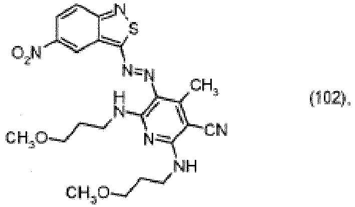

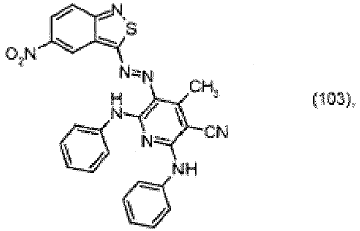

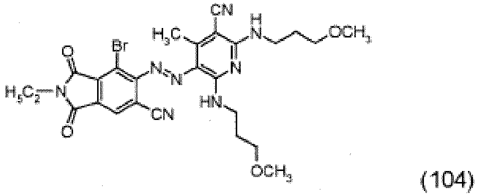

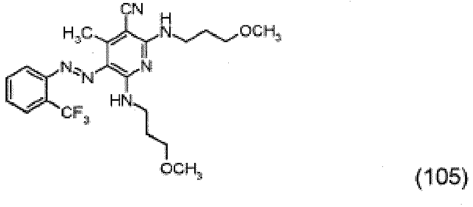

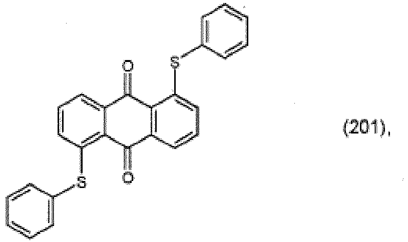

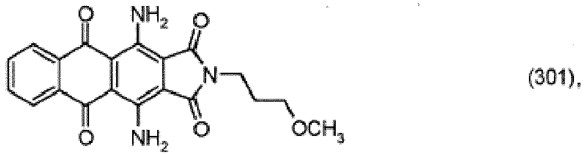

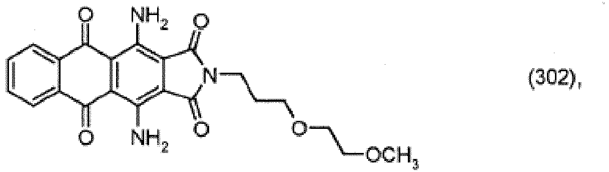

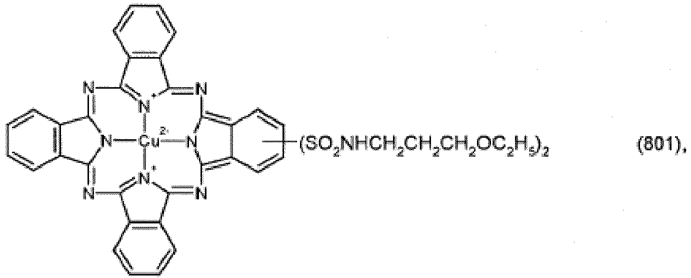

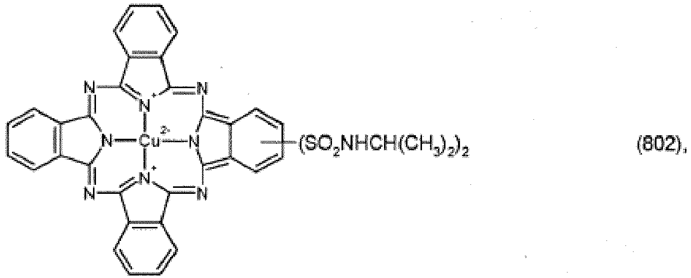

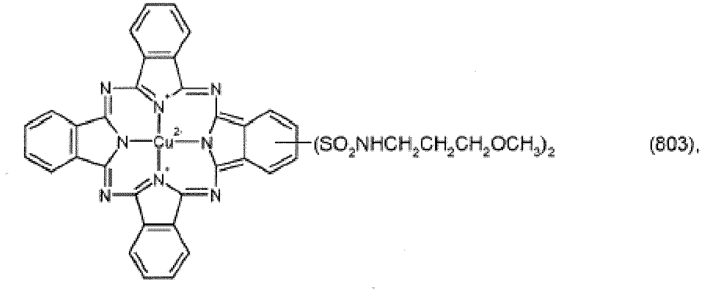

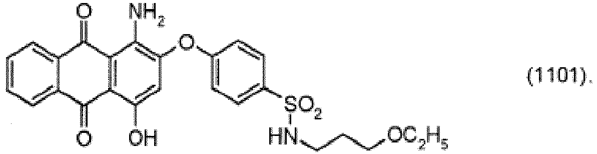

4. Verfahren nach einem der Ansprüche 1 bis 3, **dadurch gekennzeichnet, dass** die Vorbehandlungsflotte 8 bis 50 Gew.-%, bezogen auf das Gesamtgewicht der Flotte, eines wasserlöslichen organischen Lösungsmittels mit einem Siedepunkt >150 °C enthält.

5. Verfahren nach einem der Ansprüche 1 bis 4, **dadurch gekennzeichnet, dass** die wässrige Tinte 0,05 bis 35 Gew.-%, bezogen auf das Gesamtgewicht der wässrigen Tinte, mindestens eines Dispersionsfarbstoffes enthält.

6. Verfahren nach einem der Ansprüche 1 bis 5, **dadurch gekennzeichnet, dass** nach der Behandlung mit dem wasserlöslichen organischen Lösungsmittel ein Trocknungsschritt durchgeführt wird.

## Revendications

1. Procédé d'impression d'un matériau de fibres textiles de cellulose ou de mélange de cellulose conformément au procédé d'impression à jet d'encre, dans lequel le matériau de fibres au cours d'une première étape est traité avec une liqueur contenant au moins 6 % en poids d'un solvant organique ayant un point d'ébullition > 150 °C et une masse moléculaire moyenne (moyenne en poids) M_{w} = 250 à 800 g/mol sélectionné parmi le polyéthylène glycol et est ensuite imprimé avec une encre aqueuse comprenant au moins un colorant insoluble dans l'eau sélectionné parmi un colorant dispersé à condition que ladite liqueur de prétraitement comprenne < 20 % en poids d'un lactame et le colorant dispersé est sélectionné parmi les composés des formules (1) à (11) 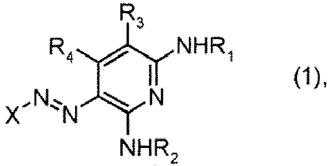
dans lequel R₁ et R₂ sont chacun indépendamment de l'autre un groupe alkyle en C₁-C₈, -(CH₂)ₙ-O-(CH₂)ₘR₅, dans lequel R₅ indique un hydrogène ou un alkyle en C₁-C₈, n est un nombre de 2 à 6 et m est un nombre de 0 à 6, un aryle en C₅-C₂₄, qui est non substitué ou substitué par un ou plusieurs groupes hydroxy, groupes alkyle en C₁-C₈, groupes alcoxy en C₁-C₄ ou atomes d'halogène ou un aralkyle en C₆-C₃₀, qui est non substitué ou substitué par un ou plusieurs groupes hydroxy, groupes alkyle en C₁-C₄, groupes alcoxy en C₁-C₄ ou atomes d'halogène,
R₃ et R₄ sont chacun indépendamment de l'autre un chlore, un brome, un cyano, un méthyle ou un trifluorométhyle,
X est un radical de formule (1a), (1b), (1c) ou (1d) 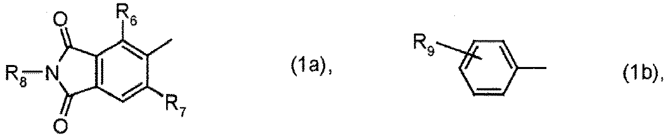 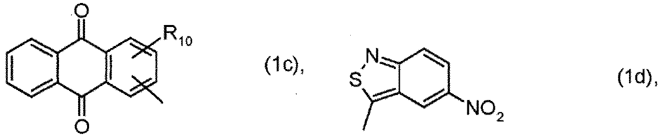
dans lequel R₆ et R₇ indépendamment de l'autre représentent un hydrogène, un chlore, un brome ou un cyano,
R₈ indique un alkyle en C₁-C₈ ou -(CH₂)ₙ-O-(CH₂)ₘR₅, dans lequel R₅ indique un hydrogène ou un alkyle en C₁-C₈, n est un nombre de 2 à 6 et m est un nombre de 0 à 6,
R₉ est un hydrogène, un fluor, un chlore, un brome, un cyano, un méthyle, un trifluorométhyle ou -SO₂CH₃ et
R₁₀ représente un hydrogène, un hydroxy ou un amino ; 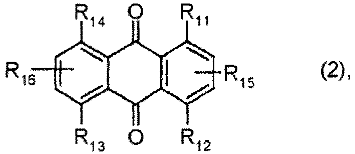
dans lequel R₁₁ indique un radical de formule (2a), (2b), (2c) ou (2d) 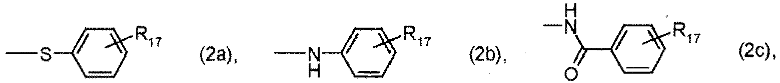 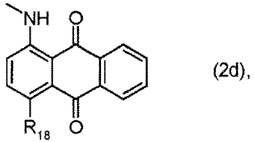
dans lequel R₁₇ est un hydrogène, un chlore, un brome, un méthyle ou un méthoxy,
R₁₈ est un hydrogène, un phénylamino, un benzamido ou un acylamido en C₁-C₁₂
l'un des radicaux R₁₂, R₁₃ et R₁₄ indique un radical de formule (2a), (2b), (2c) ou (2d) telles que définies ci-dessus et les autres sont un hydrogène, et
R₁₅ et R₁₆ sont chacun indépendamment de l'autre un hydrogène, un brome ou un chlore ; 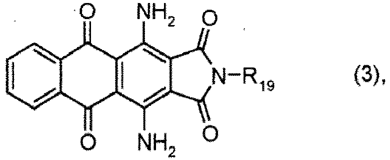
dans lequel R₁₉ indique un alkyle en C₁-C₈ ou -(CH₂)ₙ-[O-(CH₂)ₘ]ₚ-OR₂₀, et R₂₀ est un hydrogène, un méthyle ou un éthyle, n indique un nombre de 2 à 6, m est un nombre de 2 à 4 et p indique un nombre de 0 à 6 ; 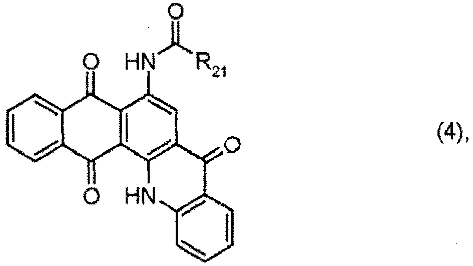
dans lequel R₂₁ est un alkyle en C₁-C₈, un aryle en C₅-C₂₄, qui est non substitué ou substitué par un ou plusieurs groupes hydroxy, groupes alkyle en C₁-C₈, groupes alcoxy en C₁-C₄ ou atomes d'halogène ou un aralkyle en C₆-C₃₀, qui est non substitué ou substitué par un ou plusieurs groupes hydroxy, groupes alkyle en C₁-C₄, groupes alcoxy en C₁-C₄ ou atomes d'halogène ; 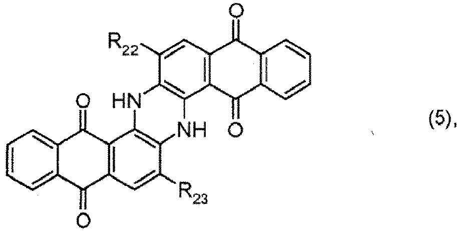
dans lequel R₂₂ et R₂₃ sont chacun indépendamment de l'autre un hydrogène, un brome ou un chlore ; 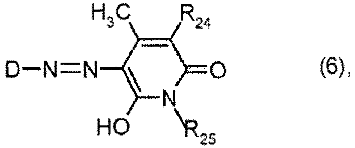
dans lequel R₂₄ indique un chlore, un brome, un cyano ou - CONH₂,
R₂₅ est un alkyle en C₁-C₂₀ ou -(CH₂)ₙ-O-(CH₂)ₘR₅, dans lequel R₅ indique un hydrogène ou un alkyle en C₁-C₈, n est un nombre de 2 à 6 et m est un nombre de 0 à 6,
D est un radical de formule (1c) tel que défini ci-dessus ou un radical de formule (6a) 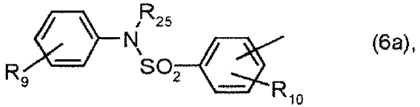
dans lequel R₉, R₁₀ et R₂₅ sont tels que définis ci-dessus ; 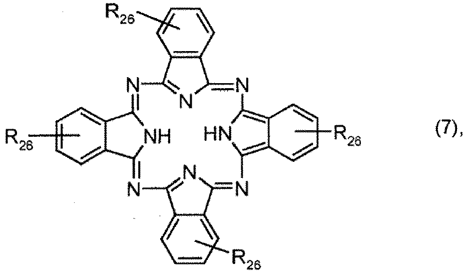
dans lequel R₂₆ indique un hydrogène ou un alcoxy en C₁-C₁₂ ; 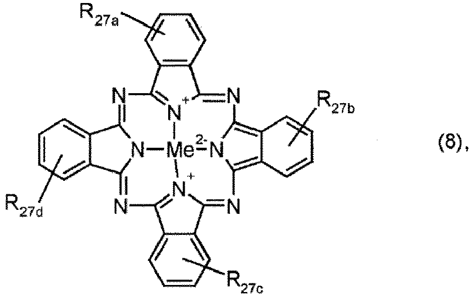
dans lequel Me indique Cu, Ni, Zn ou Pd,
R₂₇ₐ, R_{27b}, R_{27c} et R₂₇ₐ, sont chacun indépendamment des autres un hydrogène, un alcoxy en C₁-C₁₂ ou -SO₂-NH-R₂₅ et R₂₅ est tel que défini ci-dessus ; 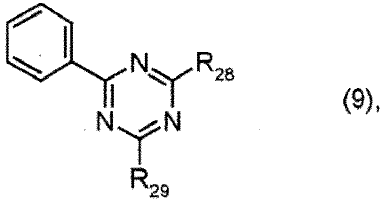
dans lequel R₂₈ et R₂₉ sont chacun indépendamment de l'autre un radical de formule (2b) ou (2d) tel que défini ci-dessus ; 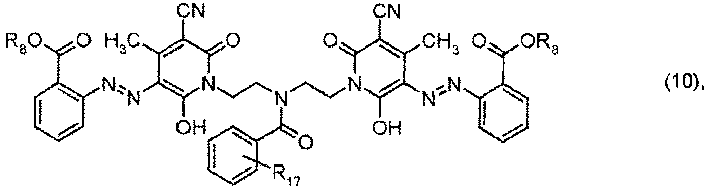
dans lequel R₈ et R₁₇ sont tels que définis ci-dessus ; 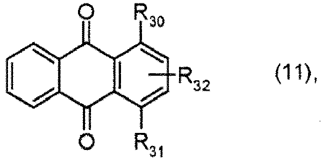
dans lequel R₃₀ et R₃₁ sont chacun indépendamment de l'autre un amino ou un hydroxyle, R₃₂ est un sulfo, un alcoxy en C₁-C₁₂, -SO₂-NH-R₂₅ ou -O-Z-SO₂-NH-R₂₅, dans lequel Z est un phénylène et R₂₅ est tel que défini ci-dessus.

2. Procédé selon la revendication 1, dans lequel l'encre aqueuse comprend un colorant dispersé sélectionné parmi les composés de formule (1), (3) ou (11) dans lequel X dans la formule (1) est un radical de formule (1a), R₁₉ dans la formule (3) indique -(CH₂)ₙ-O-(CH₂)ₘ-OR₂₀ et R₂₀, n, m et p sont tels que définis ci-dessus, et R₃₀ et R₃₁ dans la formule (11) sont un amino et R₃₂ est -SO₂-NH-R₂₅ et R₂₅ est tel que défini ci-dessus.

3. Procédé selon la revendication 1, dans lequel l'encre aqueuse comprend un colorant dispersé de formule suivante

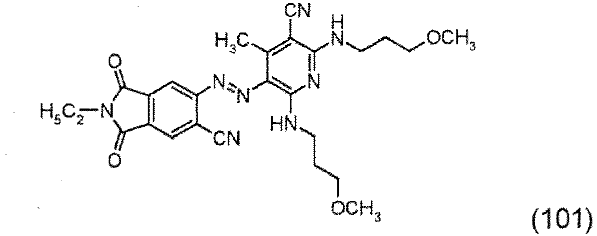

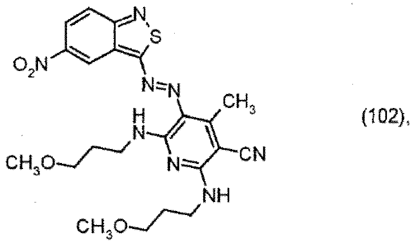

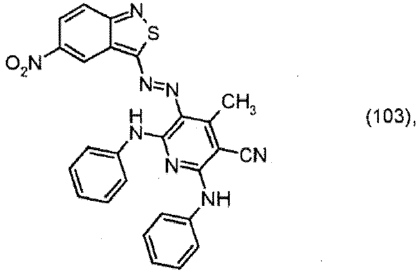

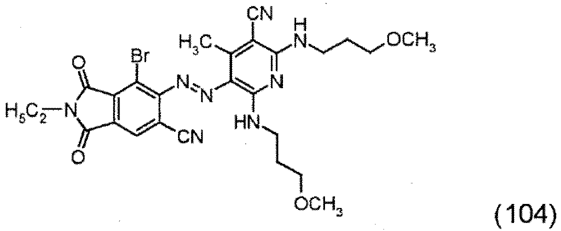

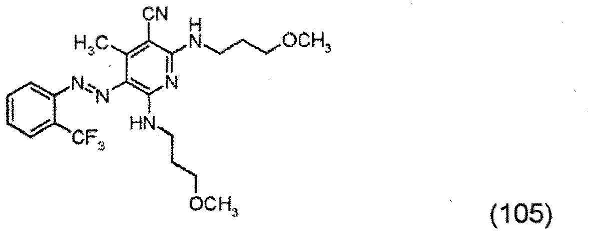

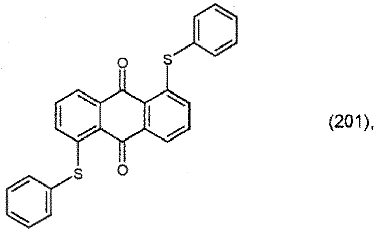

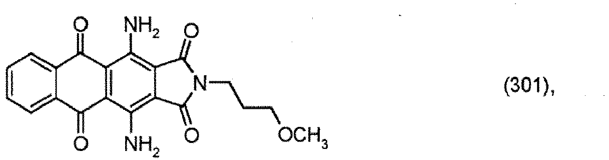

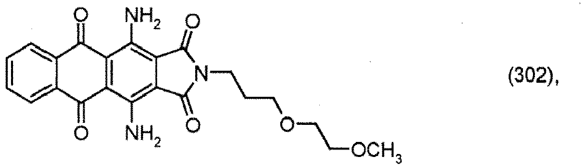

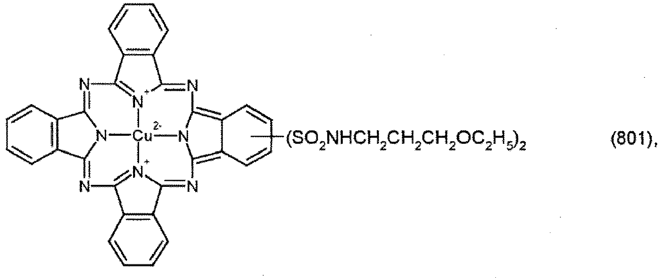

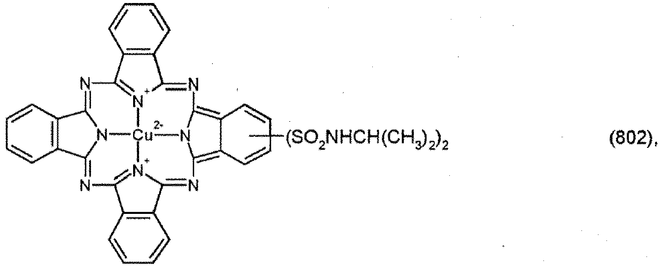

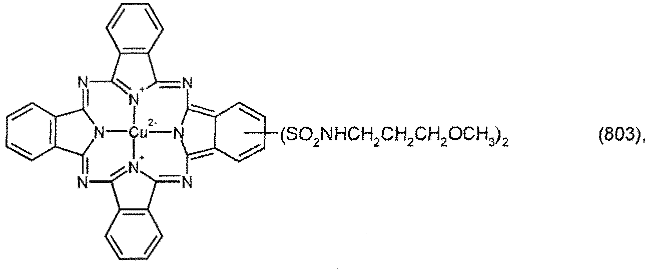

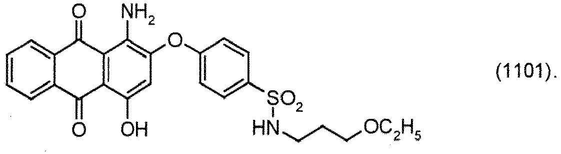

4. Procédé selon l'une quelconque des revendications 1 à 3, **caractérisé en ce que** la liqueur de prétraitement contient de 8 à 50 % en poids, sur la base du poids total de la liqueur, d'un solvant organique soluble dans l'eau ayant un point d'ébullition > 150 °C.

5. Procédé selon l'une quelconque des revendications 1 à 4, **caractérisé en ce que** l'encre aqueuse contient de 0,05 à 35 % en poids, sur la base du poids total de l'encre aqueuse d'au moins un colorant dispersé.

6. Procédé selon l'une quelconque des revendications 1 à 5, **caractérisé en ce qu'**une étape de séchage est appliquée après le traitement avec le solvant organique soluble dans l'eau.
